# EUROPEAN PATENT APPLICATION

(11) **EP 4 588 850 A1**
(43) Date of publication of application: **23.07.2025**
(21) Application number: 24153064.1
(22) Date of filing: 22.01.2024
(51) Int. Cl.: B65G 1/04, B66F 9/07

(54) **A ROBOTIC VEHICLE**

(71) Applicant: AUTOSTORE TECHNOLOGY AS, 5578 Nedre Vats (NO)
(72) Inventor: HEGGEBØ, Jørgen, 5578 Nedre Vats (NO)
(74) Representative: Kilburn & Strode LLP

(57) **Abstract**

The disclosure relates to a robotic vehicle for handling containers, the containers configured to be stored in storage columns of an automated storage and retrieval system, the robotic vehicle comprising: a base portion; a first lifting portion located above the base portion and rotatably coupled to the base portion such that the first lifting portion can rotate relative to the base portion about a vertical rotational axis; a first lifting device for lifting a container from a storage column of the automated storage and retrieval system, wherein the first lifting device is coupled to the first lifting portion; a drive system for moving the robotic vehicle on rails of a rail system above the storage columns; wherein, in a first position, the first lifting portion may lift a container from a first storage column of the automated storage and retrieval system.

## Description

### TECHNICAL FIELD

The disclosure relates to a robotic vehicle. More particularly, it relates to vehicle for handling containers, an assembly comprising a multi-container frame and a robotic vehicle and an automated storage and retrieval system.

### BACKGROUND

Traditional storage solutions usually involve the arrangement of goods on rows of shelves within a warehouse. The shelf location for each item is recorded in an inventory, and goods are retrieved from the shelves by a stock picker. The shelves are restocked and the inventory updated, as needed, as goods enter and leave the warehouse.

Warehouse workers may be assisted by robotic pickers and by automated inventory management systems. Automated transit systems may also be implemented in traditional warehouse set-ups to move goods from their inventory location to a picking and/or packing station.

An alternative to a traditional warehouse set-up is an automated storage and retrieval system in which robots retrieve items from their logged location within the warehouse and deliver the items to a packing station or port. Such systems can reduce or eliminate the space needed to pass between rows of shelves to access stock, thereby removing the need for broad aisles within the warehouse. One example of such a system involves placing goods in bins or containers that are configured to be stacked, side by side, within a three-dimensional grid. A rail system is arranged on top of the grid, along which robotic container-handling vehicles configured to lift containers from the grid can travel. The container-handling vehicles are configured to transport containers from the grid and to deliver them to ports or stations at the periphery of the grid so that the goods within the container can be picked and packed.

Robotic container-handling vehicles are central to the efficient operation of an automated storage and retrieval system. Developments in the design and operation of such robots can significantly improve the operation of automated storage and retrieval systems. It would be advantageous to improve the design of such robots.

One or more aspects of the invention of the present application are set out in the claims.

### BRIEF DESCRIPTION OF THE DRAWINGS

The disclosure will now be described in more detail in connection with a number of exemplary embodiments shown in the accompanying drawings, in which:
Fig. 1 shows a perspective view of a storage system comprising a grid and a plurality of robotic container-handling vehicles configured to retrieve and/or rearrange goods stored within the grid;
Fig. 2 shows a top view of the system of Fig. 1;
Fig. 3A shows a side view of a first robotic container-handling vehicle suitable for use in the system of Fig. 1;
Fig. 3B shows a side view of a second robotic container-handling vehicle suitable for use in the system of Fig. 1;
Fig. 3C is a perspective side view of the robot of Fig. 3B;
Fig. 4 shows a computing device for implementing the operations described herein;
Fig. 5 shows a portion of the grid of Fig. 1 containing multi-container frames;
Fig. 6A shows a perspective view of two example multi-container frames;
Fig. 6B shows a side-on view of the example multi-container frames;
Fig. 6C shows a top-down view of the example multi-container frames;
Fig. 7A shows a cut-out view of an example multi-container frame, from which a first arrangement of containers stored within the multi-container frame is visible;
Fig. 7B shows a cut-out view of the example multi-container frame, from which a second arrangement of containers stored within the multi-container frame is visible;
Fig. 8A shows an example lifting device of a container-handling vehicle that is configured to couple to a multi-container frame to enable the multi-container frame to be lifted or lowered by the container-handling vehicle;
Fig. 8B shows a side-on view of the arrangement of Fig. 8A;
Fig. 8C shows the lifting device of Figs. 8A and 8B engaged with a multi-container frame;
Fig. 8D shows a side-on view of the arrangement of Fig. 8C;
Fig. 9 shows the example lifting device of Figs. 8A-D being lowered into contact with the multi-container frame;
Fig. 10 shows the example lifting device of Figs. 8A-D engaged with the multi-container frame;
Fig. 11 shows an example lifting device of a container-handling vehicle that is configured to couple to a container held within a multi-container frame to enable the container to be lifted or lowered by the container-handling vehicle;
Fig 12. shows a robotic container-handling vehicle lifting a container out of a multi-container frame;
Fig. 13 shows an example robotic container-handling vehicle on a portion of the grid of Fig. 1 containing multi-container frames;
Fig. 14A shows a side view of the example robotic container-handling vehicle of Fig. 13;
Fig. 14B shows a perspective view of the example robotic container-handling vehicle of Fig. 13;
Fig. 14C shows a side view of the example robotic container-handling vehicle of Fig. 13 holding a multi-container frame;
Fig. 14D shows the example robotic container-handling vehicle of Fig. 13 holding a multi-container frame;
Fig. 15A shows perspective view of the example robotic container-handling vehicle of Fig. 13 holding a multi-container frame and on a portion of the grid of Fig. 1 containing multi-container frames;
Fig. 15B shows a side view of the example robotic container-handling vehicle of Fig. 13 holding a multi-container frame and on a portion of the grid of Fig. 1 containing multi-container frames;
Fig. 16A shows a side view of an example robotic container-handling vehicle;
Fig. 16B shows a perspective view of the example robotic container-handling vehicle of Fig. 16A;
Fig. 17A shows a side view of the example robotic container-handling vehicle of Fig. 16A on a portion of the grid of Fig. 1 containing multi-container frames;
Fig. 17B shows a perspective view of the example robotic container-handling vehicle of Fig. 16A on a portion of the grid of Fig. 1 containing multi-container frames;
Fig. 18A shows a side view of an example robotic container-handling vehicle;
Fig. 18B shows a perspective view of the example robotic container-handling vehicle of Fig. 18A;
Fig. 19A shows a side view of an example robotic container-handling vehicle;
Fig. 19B shows a perspective view of the example robotic container-handling vehicle of Fig. 19A;
Fig. 20A shows a side view of an example robotic container-handling vehicle;
Fig. 20B shows a perspective view of the example robotic container-handling vehicle of Fig. 20A;

Throughout the description and drawings, like reference numerals refer to like features.

### DETAILED DESCRIPTION

In overview, the disclosure relates to a robotic container-handling vehicle capable of handling containers such as multi-container frames and, in particular, capable of rotating while holding a container such as a multi-container frame. Multi-container frames are configured to hold a plurality of containers. The multi-container frames may take any suitable form. For example, the multi-container frames may themselves comprise a container or may comprise a framework configured to accommodate containers therein within a cell of the storage and retrieval system grid. The multi-container frames can thereby be handled and stored within the grid of the automated storage and retrieval system similarly to any other container. The present inventors have recognised that significant efficiencies can be achieved by providing a robotic container-handling vehicle capable rotating while holding a container such as a multi-container frame.

In more detail, according to a first aspect there is provided a robotic vehicle for handling containers, where the containers are configured to be stored in storage columns of an automated storage and retrieval system. The robotic vehicle comprises base portion, a first lifting portion located above the base portion and rotatably coupled to the base portion such that the first lifting portion can rotate relative to the base portion about a vertical rotational axis. The robotic vehicle also comprises a first lifting device for lifting a container from a storage column of the automated storage and retrieval system. The first lifting device is coupled to the first lifting portion. The robotic vehicle also comprises a drive system for moving the robotic vehicle on rails of a rail system above the storage columns. In a first position, the first lifting portion may lift a container from a first storage column of the automated storage and retrieval system. In this manner, such a robotic vehicle may lift a container and move it to a different position whilst remaining stationary on the rails of the rail system.

While a second lifting portion may be provided in some implementations, the label "first lifting portion" should not be interpreted as requiring this. In some implementations, there may be only one lifting portion. The same is true of the first lifting device.

In some implementations, when in the first position, the first lifting portion extends beyond the base portion such that the first lifting device may lift a container from a first storage column of the automated storage and retrieval system.

In some implementations, when in the first position, the first lifting portion is positioned over an opening in the base portion such that the first lifting device may lift a container from a first storage column of the automated storage and retrieval system.

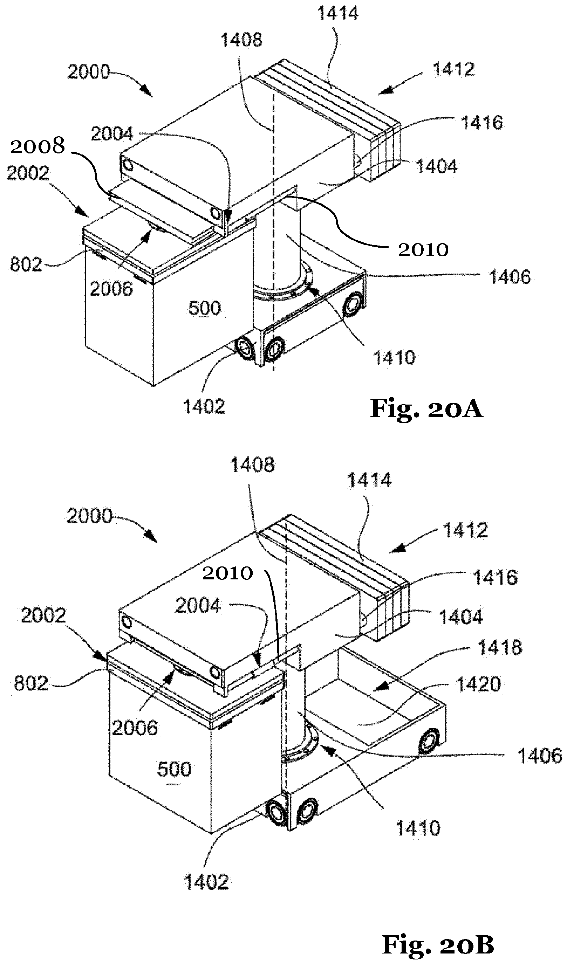

In some implementations, the first lifting device is rotatably coupled to the first lifting portion, such that the first lifting device can be rotated relative to the first lifting portion while carrying a container, thereby rotating the container relative to the first lifting portion. In this manner, the first lifting device able to rotate a container relative to the first lifting portion. As such. the robot is able to insert and remove stacker frames from storage columns at 90° relative to the first direction as well as 180°, as described below and shown in Figs. 20A and 20B.

In some implementations, the first lifting device is movable relative to the first lifting portion. In some implementations, the first lifting device is movable towards and away from the vertical rotational axis.

In some implementations, the first lifting device comprises a lifting frame rotatably coupled to a positioning frame, wherein the positioning frame is movably coupled to the to the first lifting portion such that the positioning frame can move relative to the first lifting device towards and away from the vertical rotational axis.

In some implementations, a second lifting device is coupled to the first lifting portion. In some implementations, the first lifting device and the second lifting device are arranged toward opposite ends of the first lifting portion. In some implementations, the first lifting device and the second lifting device are spaced apart by the same horizontal distance from the vertical rotational axis. In this manner, the first lifting portion is able to lift multiple containers simultaneously via the provision of first and second lifting devices. Rotation of the first lifting device may simultaneously move the first and second lifting devices to different positions.

In some implementations, the first lifting portion extends beyond the base portion such that the second lifting device may lift a container from a second storage column of the automated storage and retrieval system.

In some implementations, the first lifting portion is positioned over an opening in the base portion such that the second lifting device may lift a container from a second storage column of the automated storage and retrieval system.

In some implementations, the first lifting portion extends beyond the base portion in a first direction such that the first lifting device may lift a container from the first storage column and the first lifting portion extends beyond the base portion in a second direction such that the second lifting device may lift a container from the second storage column of the automated storage and retrieval system. In some implementations, the first direction is opposite the second direction.

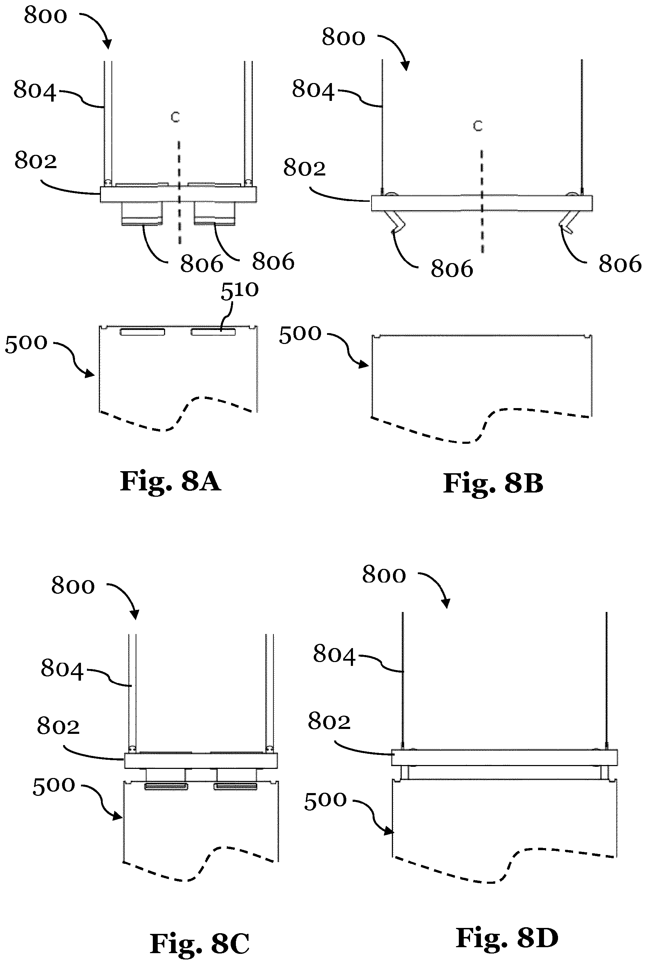

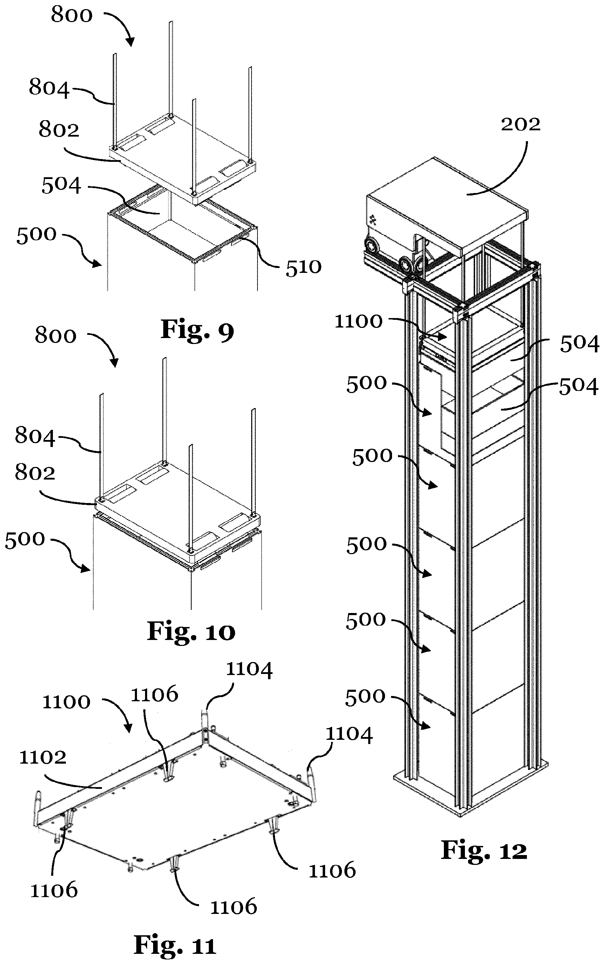

The first lifting device and/or the second lifting device may, in some implementations, be a lifting device 800 described below and shown in Figs. 8A-10 or a lifting device 1100 described below and shown in Fig. 11. In some implementations, the first lifting device is a lifting device 800 as described below and the second lifting device is a lifting device 1100 as described below. In this manner, the robot is able to handle different types of containers.

In some implementations, the first multi-container frame lifting device and/or the second multi-container frame lifting device may comprise a lifting frame connected to lifting bands. In some implementations, the lifting frame may comprise latches for gripping onto a multi-container frame, for example the latches 806 described below. In some implementations, the lifting frame may comprise grippers configured to releasably engage connecting recesses a storage container located within a multi-container frame, for example the grippers 1106 described below.

In some implementations, the robotic vehicle further comprises a first support surface for supporting a container, optionally wherein the first support surface is arranged on the base portion. In this manner, a container can be lifted by the first lifting portion and then stored on the first support surface, freeing up the first lifting portion to lift a further container.

In some implementations, the robotic vehicle further comprises a second support surface for supporting a container. In some implementations, the second support surface is arranged on the base portion. In some implementations, the second support surface is arranged on an opposite end of the base portion to the first support surface. In this manner, an additional container can be lifted by the first lifting portion and then stored on the second support surface, freeing up the first lifting portion to lift a further container while storing two containers on the first and second lifting surfaces.

In some implementations, the support surfaces are located toward opposite sides of the base. In some implementations, when the first lifting portion is in the first position, the support surfaces are located at 90° relative to the first lifting device and, optionally, at 90° relative to the second lifting device.

In some implementations, the robotic vehicle further comprises a second lifting portion rotatably coupled to the base portion such that the second lifting portion can rotate relative to the base portion, the second lifting portion is independently rotatable relative to the first lifting portion and robotic vehicle further comprises a second lifting device coupled to the second lifting portion. In this manner, the robotic vehicle may lift two containers and independently move the containers once lifted.

In some implementations, the second lifting is portion rotatably coupled to the base portion such that the second lifting portion can rotate relative to the base portion about the same vertical rotational axis.

In some implementations, when in the first position, the second lifting portion extends beyond the base portion such that the second lifting device may lift a container from a second storage column of the automated storage and retrieval system.

In some implementations, the robotic vehicle further comprises a counterweight device comprising a movable counterweight. In this manner, a counterweight is provided which can offset the load of a container lifted by the first lifting device. The counterweight can be moved to different positions depending on the load of the container being lifted.

In some implementations, the movable counterweight of the counterweight device is movably coupled to the first lifting portion. In some implementations, the counterweight is coupled to the first lifting portion via a movable counterweight guide. In some implementations, the first lifting device and the moveable counterweight are arranged toward opposite ends of the first lifting portion. In some implementations, the moveable counterweight projects from the first lifting portion and is configured be moved between locations at different distances from the first lifting portion.

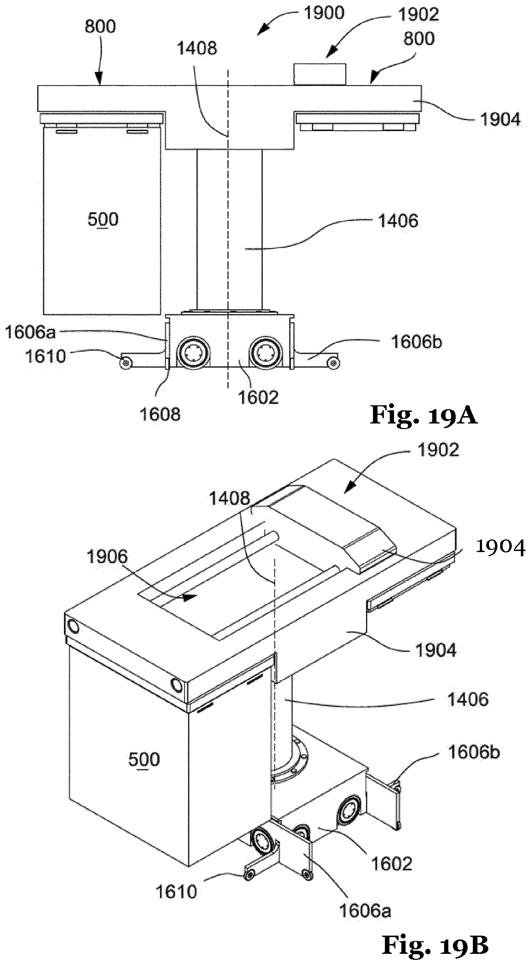

In some implementations, the moveable counterweight is configured to be moved to different locations between the first lifting device and a/the second lifting device coupled to the first lifting portion, as shown in Figs. 19A and 19B.

In some implementations, the robotic vehicle further comprises stabilizer wheels. In some implementations, the robotic vehicle further comprise stabilizer arms, each coupled to a respective one of the stabilizer wheels. The stabilizer arms may be configured to be raised and lowered to selectively disengage or engage the respective stabilizer wheels with the rail system in some implementations. In this manner, additional stability can be provided by the stabilizer wheels, for example when performing a lifting operation. In another example implementation, stabilizer arms may be configured to slid in and out of the base portion.

In some implementations, the first lifting portion is rotatably coupled to the base portion via a support, such that the first lifting portion is spaced apart from the base portion by the support, optionally wherein a longitudinal axis of the support defines the vertical rotational axis.

In some implementations, the containers are multi-container frames configured to accommodate a plurality of storage containers in an interior space of the multi-container frames. In some implementations, the containers are stacker frames configured to accommodate a plurality of storage containers stored one on top of another in a vertical stack in an interior space of the stacker frame.

In some implementations, the base portion the robotic vehicle has a footprint that corresponds to the footprint of a single storage column of the automated storage and retrieval system. In some implementations, the footprint of the robotic vehicle corresponds to two or more storage columns.

According to another aspect of the present disclosure, an assembly comprising one or more multi-container frames and a robotic vehicle as described above is provided. In some implementations, the multi-container frame comprises an interior space configured to accommodate a plurality of storage containers, optionally, wherein the plurality of storage containers are stored one on top of another in a vertical stack.

According to another aspect of the present disclosure, an automated storage and retrieval system is provided, comprising a plurality of storage columns, a rail system located above the storage columns, a plurality of multi-container frames configured to be stored in the storage columns of the automated storage and retrieval system, and a robotic vehicle as described above.

In some implementations, the rail system comprises a first set of rails arranged in a horizontal plane and extending in a first direction and a second set of rails arranged in the horizontal plane and extending in a second direction which is orthogonal to the first direction, wherein the first and second sets of rails form a grid pattern comprising a plurality of grid cells in the horizontal plane, wherein each grid cell comprises a grid opening defined by rails of the first set of rails and rails of the second set of rails, and/or, each storage column is located vertically below a grid opening, and/or, each multi-container frame is configured to accommodate a plurality of storage containers in an interior space of the respective multi-container frame, optionally, wherein the plurality of storage containers are stored one on top of another in a vertical stack.

The systems and methods introduced in the above overview will now be described in further detail. Various non-limiting example implementations will be described to aid understanding.

### Automated storage and retrieval system overview

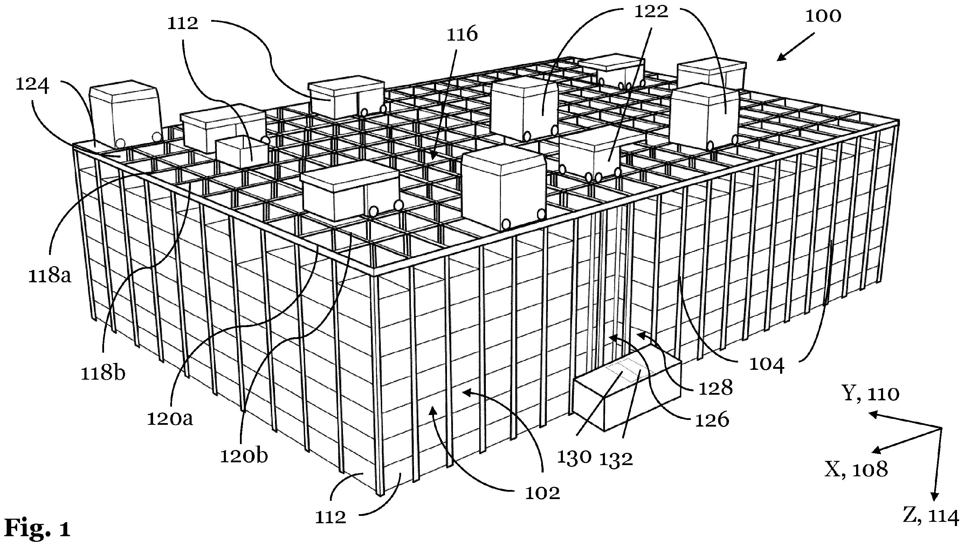

Referring to the embodiment shown in Fig. 1, a grid 100 comprises a frame formed by a plurality of generally rectilinear, adjacent vertical columns 102 formed between vertical frame members 104 and extending in the X and Y directions 108, 110. The grid elements may be fabricated of any appropriate material; for example, the frame members may be formed of extruded aluminium. Storage containers or bins 112 are stacked on top of each other, preferably in a self-supporting manner, in the Z direction 114 in the columns 102, forming a storage volume of storage cells for respective bins 112 extending in the X, Y and Z directions 108, 110, 114.

A rail system or network 116 is formed on top of the grid 100 and comprises pairs of vehicle rails or tracks 118a, 118b and 120a, 120b, respectively extending in the X and Y directions 108, 110. Robotic container-handling vehicles, robotic vehicles, or robots, 122, which can be of a range of size, shape and function, are provided and configured to run on the rails 118, 120 and to transport bins 112 in both the X and Y directions 108, 110. The robots 122 are additionally configured to lift and lower bins 112 from/into the columns 102 in the Z direction 114, the bins 112 optionally being guided by the vertical frame members 104. The robots 122 access the bins 112 via access openings 124 above the columns 102 and formed between the rails 118, 120.

Some columns 102 may be used for alternative purposes than bin storage. For example, port columns 126, 128 comprise port or access columns allowing transfer of a bin 112 in and/or out of the grid 100. Port columns 126, 128 provide a vertical channel for lifting of a bin 112 from, or lowering of a bin 112 to, a port or ports 130, 132. The ports 130, 132 are shown in Fig. 1 at the lowest level of the grid, however ports can be located at any vertical position along the column. The respective port columns 126, 128 can be assigned for removing ('drop-off) and/or returning or delivering ('pick-up') bins 112 from/to the grid 100. The ports 130, 132 are therefore configured to allow bins 112 to be removed and reintroduced (horizontally) into the associated port column. As such, a port 130, 132 can comprise a conveyor (not shown in Fig. 1) onto which a bin 112 may be lowered and transported horizontally out of the port column. The port columns 126, 128 include an opening or access point through which bins 112 can enter and leave the column.

Bins 112 can be transported along the top of the grid 100 to and/or from a port column 126, 128 by robots 122, and from a port 130, 132 to a location outside the grid 100, which may be an access station (not shown) for processing of the bin 112 or its contents, such as a picking station for adding content to, or removing content from, the bin 112. In alternative examples (not shown), the bin 112 may be transported to a port of another grid on the same or another level, or to an external facility. Transport of bins 112 to and from ports 130, 132 may be by any appropriate means (not shown) including conveyors, transport vehicles, lifts or robots.

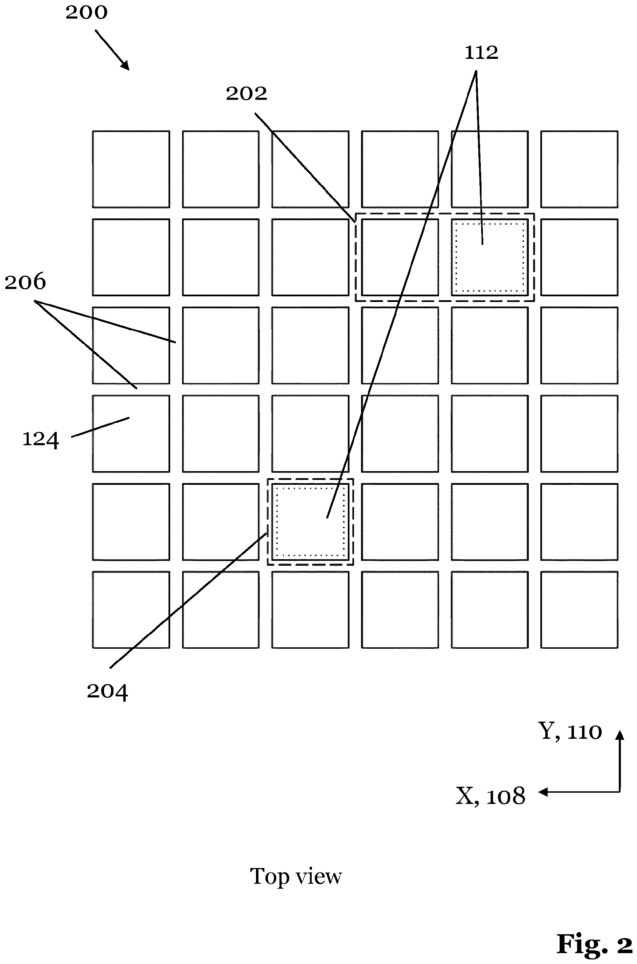

Referring to the embodiment shown in Fig. 2, the X-Y configuration 200 of the rail system 116 can be seen in more detail, together with robots 202, 204 of different types. The rail system includes rails 206 defining between them vertical column access openings 124 for access to bins 112. The rails 206 can be any appropriate type for permitting travel of the robots 202, 204 in the X and Y directions 108, 110 thereon, including (not shown) groove-type rails for receiving vehicle wheels, or protrusion-type rails for engaging wheel recesses. Each rail 206 may comprise a single track or multiple parallel tracks in each of the X and Y directions 108, 110.

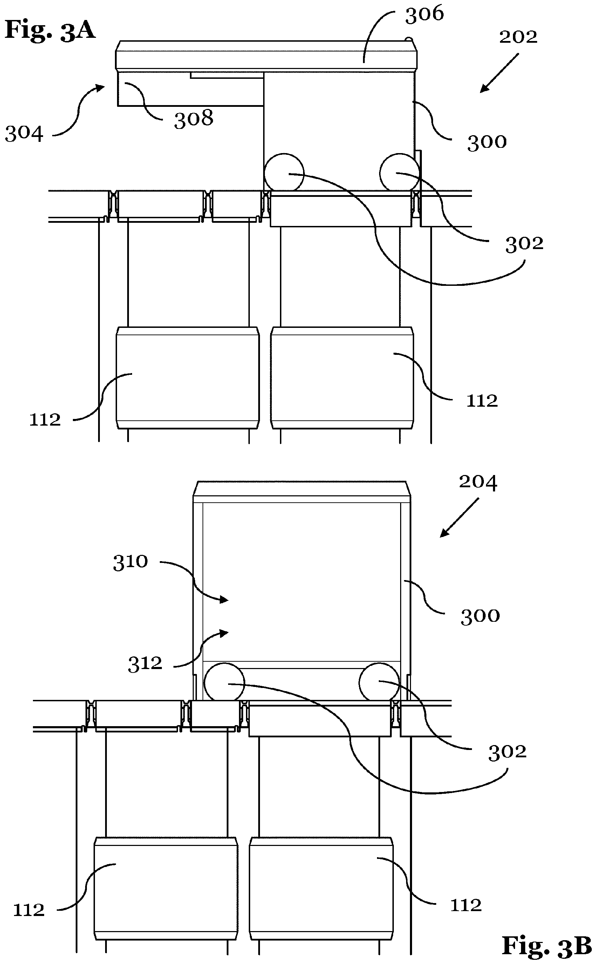

A first, 'cantilever' type of robot 202 is shown in more detail in Fig. 3A and includes a body 300, a set of wheels 302 and a lifting device 304. The body 300 contains operational equipment (not shown) for the robot 202 including drive, power and control systems. The wheels 302 permit movement of the robot 202 in one of the X and Y directions, an additional set of wheels (not visible in this view) permitting movement in the other of the X and Y directions, in both cases along the respective rails or tracks 206. One or both sets of wheels can be raised or lowered to permit selective engagement of the rails for movement in the desired direction. The lifting device 304 includes a cantilever element 306 extending in the X-Y plane from the top of the body 300, and a gripping device 308, which is raisable and lowerable from the cantilever element 306. The gripping device 308 is configured to grip or engage a bin 112; for example, by gripping a part of the bin 112, or by passively or actively engaging a suitably configured part of the bin 112.

A second, 'internal cavity' type of robot 204 is shown in more detail in Fig. 3B and includes, as an alternative to the cantilevered lifting system, an internal cavity 310 within the body 300 and in which the lifting device 312 including a gripping device (not shown) is located. In this case, the body 300 includes the robot's operational equipment and a storage space for one or more bins 112, for use, for example, while transporting the bin 112.

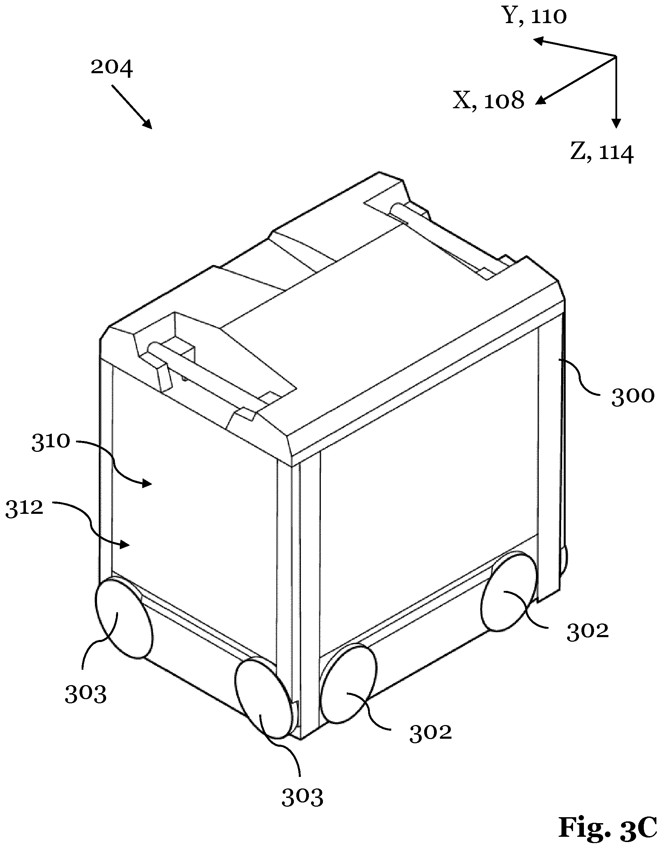

Fig. 3C shows a perspective side view of the robot of Fig. 3B in which the first set of wheels 302 from Fig. 3B are visible. The additional set of wheels referenced above but not shown in Fig. 3B are shown as wheels 303 in Fig. 3C. The additional set of wheels 303 is arranged perpendicular to the first set of wheels 302, to allow rolling of the robot 204 in the X and Y directions on the first and second set of wheels 302, 303 respectively. The first and second set of wheels 302, 303 shown in Fig. 3C may be configured to be independently lowered into engagement with the rails (and conversely raised out of engagement with the rails) to allow the robot 202 to move in the X and Y direction across the arrangement of rails shown in Fig. 2. Although the perspective view shown in Fig. 3C is of the robot 204 of Fig. 3B, it will be appreciated that a similar perpendicular wheel arrangement may be applied to the robot 202 of Fig. 3A.

### Control and monitoring system

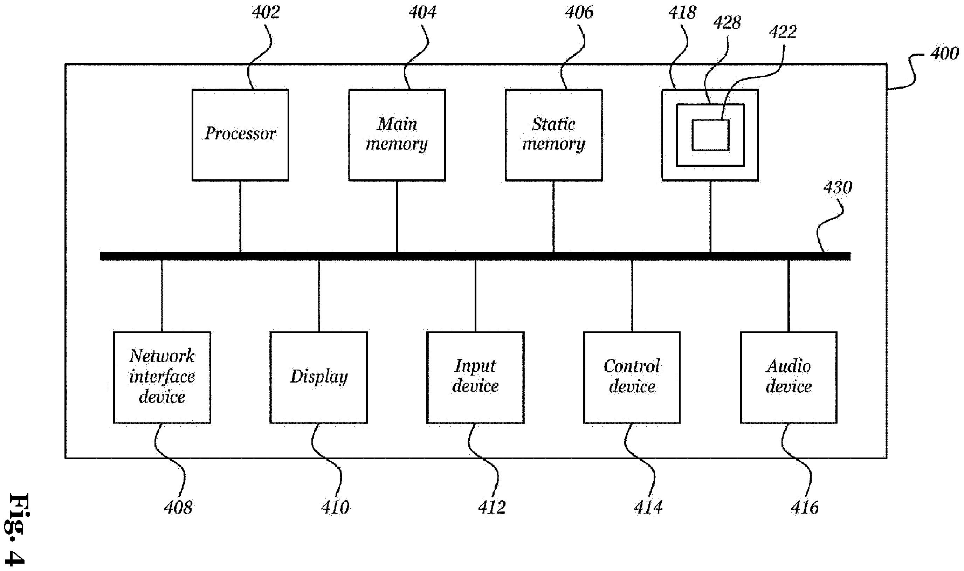

Control and monitoring of the automated storage and retrieval system, including monitoring and storing bin position and controlling bin delivery, retrieval and transport and robot routing and collision avoidance, is performed by a control system shown in Fig. 4 in communication with the robots and/or other controllable system components. Control can be performed locally or remotely and may be implemented by a processing system, for example in the form of a computing device. Accordingly, the methods described herein may form all or part of a computer-implemented method, or a system configured to perform the methods described herein.

With reference to Fig. 4, a processing system 400 suitable for carrying out the methods described herein will now be described. Fig. 4 shows a block diagram of one implementation of a processing system 400 in the form of a computing device within which a set of instructions for causing the computing device to perform any one or more of the methods described herein may be executed. In some implementations, the computing device may be connected (e.g., networked) to other machines in a Local Area Network (LAN), an intranet, an extranet, or the Internet. The computing device may operate in the capacity of a server or a client machine in a client-server network environment, or as a peer machine in a peer-to-peer (or distributed) network environment. The computing device may be a personal computer (PC), a tablet computer, a set-top box (STB), a Personal Digital Assistant (PDA), a cellular telephone, a web appliance, a server, a network router, switch or bridge, or any machine capable of executing a set of instructions (sequential or otherwise) that specify actions to be taken by that machine. Further, while only a single computing device is illustrated, the term 'computing device' shall also be taken to include any collection of machines (e.g., computers) that individually or jointly execute a set (or multiple sets) of instructions to perform any one or more of the methods described herein.

The example processing system 400 includes a processor 402, a main memory 404 (e.g., read-only memory (ROM), flash memory, dynamic random-access memory (DRAM) such as synchronous DRAM (SDRAM) or Rambus DRAM (RDRAM), etc.), a static memory 406 (e.g., flash memory, static random-access memory (SRAM), etc.), and a secondary memory (e.g., a data storage device 418), which communicate with each other via a bus 430.

Processor 402 represents one or more general-purpose processors such as a microprocessor, central processing unit, or the like. More particularly, the processor 402 may be a complex instruction set computing (CISC) microprocessor, reduced instruction set computing (RISC) microprocessor, very long instruction word (VLIW) microprocessor, processor implementing other instruction sets, or processors implementing a combination of instruction sets. Processor 402 may also be one or more special-purpose processors such as an application specific integrated circuit (ASIC), a field programmable gate array (FPGA), a digital signal processor (DSP), network processor, or the like. Processor 402 is configured to execute the processing logic (instructions 422) for performing the operations and steps described herein.

The processing system 400 may further include a network interface device 408. The processing system 400 also may include any of a video display unit 410 (e.g., a liquid crystal display (LCD) or a cathode ray tube (CRT)), an alphanumeric input device 412 (e.g., a keyboard or touchscreen), a cursor control device 414 (e.g., a mouse or touchscreen), and an audio device 416 (e.g., a speaker).

It will be apparent that some features of the processing system 400 shown in Fig. 4 may be absent. For example, the processing system 400 may have no need for display device 410 (or any associated adapters). This may be the case, for example, for particular server-side computer apparatuses which are used only for their processing capabilities and do not need to display information to users. Similarly, user input device 412 may not be required. In its simplest form, processing system 400 comprises processor 402 and main memory 404.

The data storage device 418 may include one or more machine-readable storage media (or more specifically one or more non-transitory computer-readable storage media) 428 on which is stored one or more sets of instructions 422 embodying any one or more of the methods or functions described herein. The instructions 422 may also reside, completely or at least partially, within the main memory 404 and/or within the processor 402 during execution thereof by the processing system 400, the main memory 404 and the processor 402 also constituting computer-readable storage media 428.

The various methods described herein may be implemented by a computer program. The computer program may include computer code arranged to instruct a computer to perform the functions of one or more of the various methods described herein. The computer program and/or the code for performing such methods may be provided to an apparatus, such as a computer, on one or more computer-readable media or, more generally, a computer program product. The computer-readable media may be transitory or non-transitory. The one or more computer-readable media could be, for example, an electronic, magnetic, optical, electromagnetic, infrared, or semiconductor system, or a propagation medium for data transmission, for example for downloading the code over the Internet. Alternatively, the one or more computer-readable media could take the form of one or more physical computer-readable media such as semiconductor or solid-state memory, magnetic tape, a removable computer diskette, a random-access memory (RAM), a read-only memory (ROM), a rigid magnetic disc, or an optical disk, such as a CD-ROM, CD-R/W or DVD.

The computer program is executable by the processor 402 to perform functions of the systems and methods described herein.

In an implementation, the modules, components, and other features described herein can be implemented as discrete components or integrated in the functionality of hardware components such as ASICS, FPGAs, DSPs, or similar devices.

A 'hardware component' is a tangible (e.g., non-transitory) physical component (e.g., a set of one or more processors) capable of performing certain operations and may be configured or arranged in a certain physical manner. A hardware component may include dedicated circuitry or logic that is permanently configured to perform certain operations. A hardware component may be or include a special-purpose processor, such as a field programmable gate array (FPGA) or an ASIC. A hardware component may also include programmable logic or circuitry that is temporarily configured by software to perform certain operations.

Accordingly, the phrase 'hardware component' should be understood to encompass a tangible entity that may be physically constructed, permanently configured (e.g., hardwired), or temporarily configured (e.g., programmed) to operate in a certain manner or to perform certain operations described herein.

In addition, the modules and components can be implemented as firmware or functional circuitry within hardware devices. Further, the modules and components can be implemented in any combination of hardware devices and software components, or only in software (e.g., code stored or otherwise embodied in a machine-readable medium or in a transmission medium).

### Operation of the automated storage and retrieval system

In operation, each bin 112 is given a unique identifier, which may be marked on the bin 112 using a computer-readable identifier (e.g., a barcode, quickresponse code or radio-frequency identification tag) to ease identification of the bin 112. A database of the processing system 400 stores, in association with the unique identifier, the position and, optionally, content of each bin 112. When a bin 112 is moved (e.g., when it is retrieved from the grid 100), the database is updated to record its change in position.

When it is desired to retrieve a bin 112 from the grid 100, under control of the processing system 400, a robot 202, 204 is routed via the rail system 116 to the vertical column 102 including the storage cell where, according to the database, the bin 112 is positioned, and the lifting device 304, 312 is positioned (according to robot type) over the corresponding access opening 124, either adjacent or below the robot 202, 204. The robot 202, 204 lowers the gripping device 308 which engages, grips and lifts the bin 112 to the robot 202, 204. The robot 202, 204 then transports the bin 112, for example, to the drop-off port column 126, 128 for delivery to the port 130, 132 and subsequent processing external to the grid 100. In the event that the target or designated bin 112 is below other bins in the stack then the robot 202, 204 or multiple robots, which may be dedicated to the task, are controlled in a 'digging' operation to sequentially lift and reposition, temporarily or permanently, bins above the target bin 112 in order for it to be retrieved. It will be appreciated that other operations in relation to the bin 112 can be carried out in a similar manner. For example, a bin 112 can be delivered for storage in the grid 100 at the port 130, 132 of the pick-up port column 126, 128, gripped and lifted by a robot 202, 204 and delivered to the desired storage cell, bins above the desired position being repositioned if necessary as discussed above.

### Description of specific improvements

The present disclosure relates to multi-container frames, in other words frames or containers that are themselves configured to hold a plurality of other containers. These multi-container frames can be stored and handled in the automated storage and retrieval system of the present disclosure in the same manner as the bins or containers 112 referenced above in relation to Figures 1-4. Accordingly, multi-container frames represent an example implementation of the containers or bins 112 described above and shown in Figs. 1, 2, 3A and 3B. A multi-container frame may be configured to accommodate between two and six containers in a typical implementation, although larger multi-container frames are possible.

In the primary implementation of the present disclosure, the multi-container frames are configured to accommodate a plurality of bins or containers within them, stacked on top of one another. In that case, the multi-container frame may be referred to as a "stacker frame" because the containers held within it are stacked on top of one another. For simplicity, the remainder of this disclosure will focus on this form of multi-container frame. However, it will be appreciated that in other implementations (not shown in the accompanying Figures), the multi-container frame may accommodate a plurality of containers side-by-side or otherwise arranged, and the containers may not be stacked on top of one another within the multi-container frame. Accordingly, while the remainder of this disclosure focuses on stacker frames, this is not to be considered as limiting and the present invention relates to any form of multi-container frame configured to accommodate a plurality of containers within it.

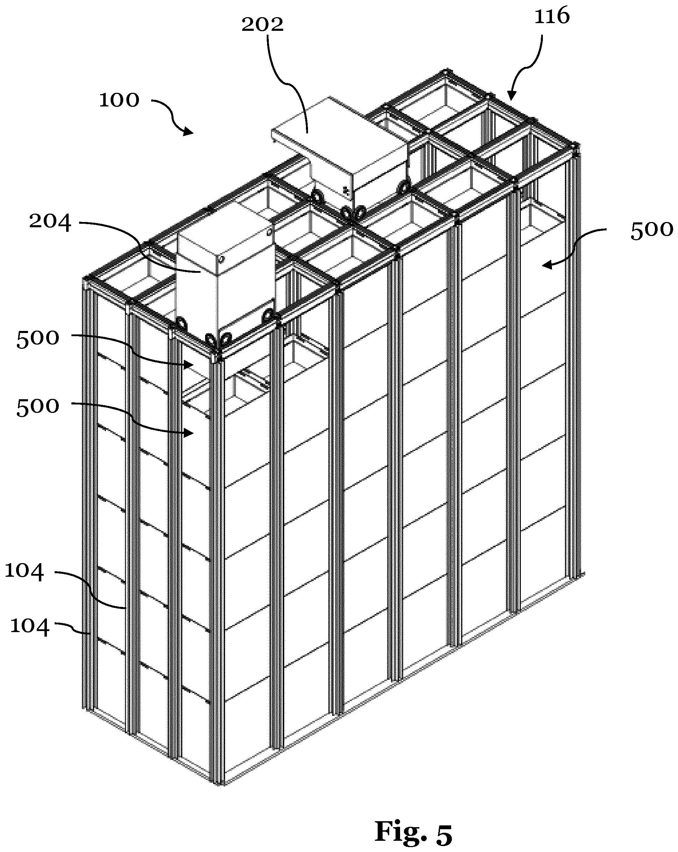

Turning now to Figure 5, this figure shows a subsection of the automated storage and retrieval system shown in Fig. 1. A portion of the grid 100 can be seen together with robotic container-handling vehicles, robotic vehicles, or robots 202, 204 operating on the rail system 116. In the system shown in Figure 5, the containers or bins 112 are multi-container frames 500. As noted above, in this implementation the multi-container frames 500 are all stacker frames 500, in which the containers are stored one on top of the other. Accordingly, for simplicity, the phrase "stacker frame" will be used hereafter. However, the following description applies to any form of multi-container frame.

As can be seen from Figure 5, one of the stacker frames 500 is in the process of being lifted by robot 204. This is performed in a similar manner as discussed above in relation to the containers 112 of Figure 1. Further details of how stacker frames 500 are lifted will be described below.

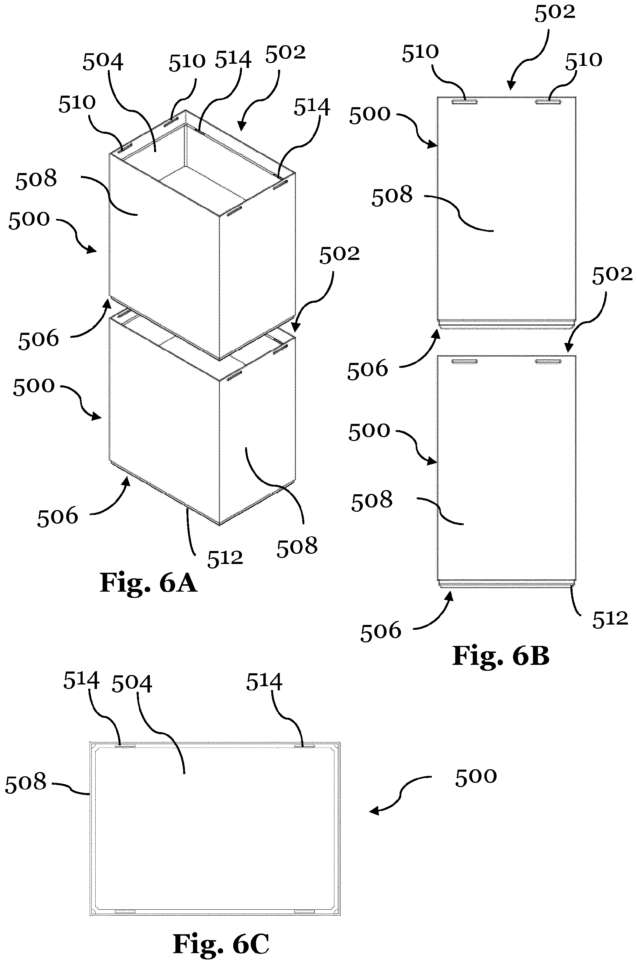

Example stacker frames 500 are shown in more detail in Figs. 6A to 6C. Each of the stacker frames 500 has an open top end 502 for allowing a storage container 504 to pass into the stacker frame 500. As already noted, each stacker frame 500 is configured to accommodate a plurality of storage containers 504 stored one on top of another in a vertical stack within the stacker frame 500. Each stacker frame 500 is therefore configured to support the lowermost storage container 504 within the stacker frame 500. One or more further storage containers 504 are then placed on top of the lowermost storage container 504, with each container 504 supporting the container placed above it. The storage containers 504 stored within stacker frame 500 may correspond to the containers 112 of Figure 1, or may be specially designed containers configured for storing within a stacker frame 500.

Each stacker frame 500, comprises a bottom end 506, for supporting a lowermost storage container 504. In the present example, side walls 508 extend between the bottom end 506 and the top end 502, although in other examples stacker frame 500 may simply comprise a framework defining the frame within which the containers 504 are held and so side walls 508 may be largely omitted.

In this implementation, connecting recesses 510 are arranged at the top end 502 within opposing side walls 508. The connecting recesses 510 are arranged such that they are accessible and protrude above the top of the uppermost storage container 504 in the stack of storage containers 504 within each stacker frame 500 when the stacker frame 500 is full. These recesses enable the stacker frames 500 to be placed into and lifted out of a storage column of the grid, as will be described in further detail below.

To facilitate efficient storage and enable stacker frames 500 themselves to be stacked, the bottom end 506 of each stacker frame 500 may have a recessed portion 512 having an outer periphery being smaller than, i.e. configured to fit within, an inner periphery of the top end 502 of another stacker frame 500. In this manner, the stacker frames 500 may be stacked on top of one another while horizontal movement between them is restricted to improve stability.

As can be seen in the top-down view of a stacker frame 500 in Figure 6C, each storage container 504 held within the stacker frame 500 in this implementation includes connecting recesses 514. These recesses 514 are arranged in the upward facing surface or upper rim of the sidewalls of the storage container 504. These recesses enable the containers 504 to be placed into and lifted out of the stacker frame 500, as will be described in further detail below.

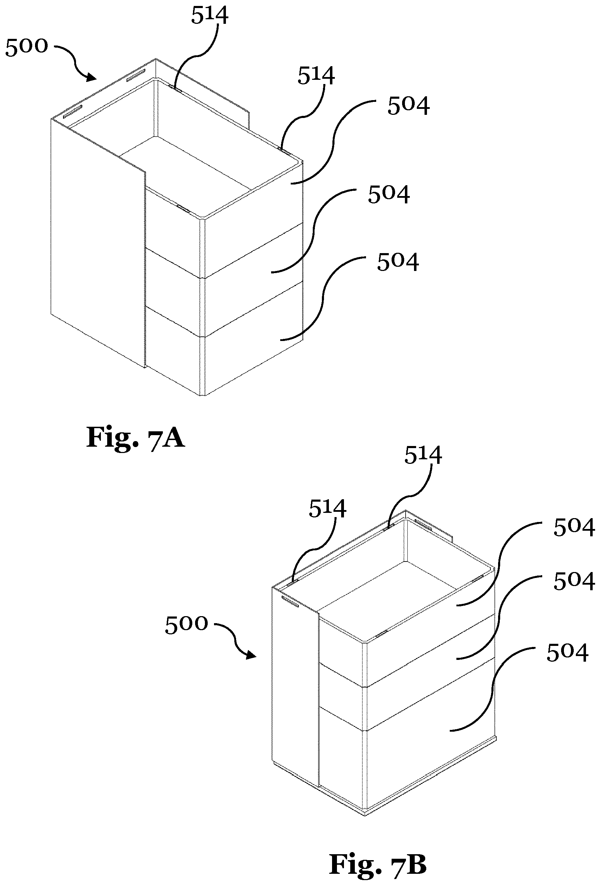

Figs. 7A and 7B show stacker frames 500 with a cut-away section to better illustrate the stacking of the storage containers 504 inside the stacker frame 500. The stacker frame 500 shown in Fig. 7A has three evenly sized storage containers 504, whereas in the stacker frame 500 shown in Fig. 7B the lowermost storage container 504 is larger in height than the other storage containers 504. The number, shape and size of storage containers 504 that can be accommodated within any given stacker frame 500 may vary. As noted above, typically there are between two and six storage containers 504 within a stacker frame 500 when the stacker frame 500 is full.

As noted above, stacker frames 500 can be stored in grid 100 and moved around by container-handling vehicles 202, 204 in a similar manner to ordinary bins or containers 112. A variety of modifications may be made to the container-handling vehicles 202, 204 to enable them to better interact with stacker frames 500 and the containers 504 stored within stacker frames. Some example implementations detailing such modifications will now be described, however it will be appreciated that other mechanisms maybe provided additionally or alternatively.

Figs. 8A, 8B, 8C, 8D, 9 and 10 show an example lifting device 800 to enable container-handling vehicles 202, 204 to lift stacker frames 500. The lifting device 800 may be provided as the lifting device 304 of container-handling vehicle 202 or the lifting device 312 of container-handling vehicle 204. It may also be used in the lifting device of any of the robots 1300, 1600, 1800, 1900 and 2000 described below. The lifting device 800 is configured to engage with a stacker frame 500 such that the stacker frame 500 may be lifted or lowered into or out of a column 102 of the grid 100.

The lifting device 800 in this example comprises a lifting frame 802 connected to lifting bands 804, which are windable/winchable from at least one lifting shaft (not depicted) of the container-handling vehicle 202, 204 to lift or lower the lifting frame 802. The lifting frame 802 comprises a horizontal element, as depicted, and latches 806 arranged on the lifting frame 802. The latches 806 are an example implementation of a gripping device, such as gripping device 308 described above. The latches 806 are configured to move between a release position, as shown in Figs. 8A, 8B and 9, and a connected position, as shown in Figs. 8C, 8D and 10. In the release position the latches 806 are closer to a vertical centreline C of the lifting frame 802 than in the connected position. When moving from the release position to the connected position, the latches 806 are moved away from the vertical centreline C and are configured to extend through the connecting recesses 510 in the side wall 508 of a stacker frame 500.

The latches 806, when engaged with connecting recesses 510, are positioned within an interior space of the stacker frame 500. This is particularly advantageous as the space provided between adjacent columns 102 of the grid 100 can be reduced as the lifting device 800 requires no clearance outside of the stacker frame 500.

Figs. 11 and 12 show a lifting device 1100 for lifting storage containers 504 out of stacker frames 500. The lifting device 1100 may be provided as the lifting device 304 of container-handling vehicle 202 or the lifting device 312 of container-handling vehicle 204. It may also be used in the lifting device of any of the robots 1300, 1800, 1900 and 2000 described below. The lifting device 1100 is configured to engage a storage container 504 for lifting or lowering the storage container 504 relative to a stacker frame 500 in which the storage container 500 is stored.

The lifting device 1100 may comprise a lifting frame 1102 connected to lifting bands 1104, which are windable/winchable from at least one lifting shaft (not depicted) of the container-handling vehicle 202, 204 to lift or lower the lifting frame 1102. The lifting frame 1102 comprises a horizontal element, as depicted, and grippers 1106 arranged on the lifting frame 1102. The grippers 1106 are configured to releasably engage connecting recesses 514 arranged in an upper rim of a storage container 504 as illustrated in Figs. 6A, 6C, 7A and 7B.

Container-handling vehicles 202, 204 may be configured to retrieve a storage container 504 via an open top end 502 of a stacker frame 500, as shown for example in Fig. 12. In this figure the uppermost stacker frame 500 in Fig. 12 has a cut-away section to better illustrate the stacking of the storage containers 504 inside the stacker frame 500. The topmost container 504 has been lifted out of the top most stacker frame 500 by container-handling vehicle 202.

To enable a storage container 504 to be retrieved from a stacker frame 500 in this way, the lifting frame 1102 has an outer periphery configured to fit within an inner periphery of the side walls of the stacker frame 500. The inner periphery of the side walls of the stacker frame 500 may be configured to guide the lifting frame 1102 when within the stacker frame 500.

Example lifting mechanisms to enable a container-handling vehicle to lift a stacker frame 500 or container 504 from a stacker frame have been described with reference to Figures 8A-12. However, it will be appreciated that these mechanisms are merely exemplary. Other mechanisms can be used, and both stacker frames 500 and containers 504 may be modified appropriately to accommodate an alternative form of lifting mechanisms.

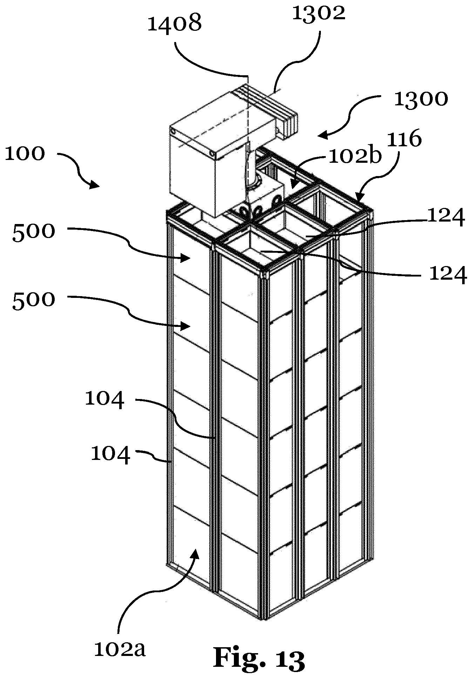

Fig. 13 shows a subsection of the automated storage and retrieval system shown in Fig. 1. A portion of the grid 100 can be seen together with a robotic container-handling vehicle 1300 (also known as a robotic vehicle or robot) operating on the rail system 116. In the system shown in Figure 13, the containers or bins 112 are multi-container frames 500. As noted above, in this implementation the multi-container frames 500 are all stacker frames 500, in which the containers are stored one on top of the other. Accordingly, for simplicity, the phrase "stacker frame" will be used hereafter. However, the following description applies to any form of multi-container frame. It will be noted that the robot 1300 may be used with any type of containers or bins 112 and need not necessarily be limited to use with stacker frames 500.

The robotic container-handling vehicle 1300 is shown Fig. 13 in a first position in which a lifting portion 1404 of the robot may lift a container from a storage column 102 of the automated storage and retrieval system, as described below.

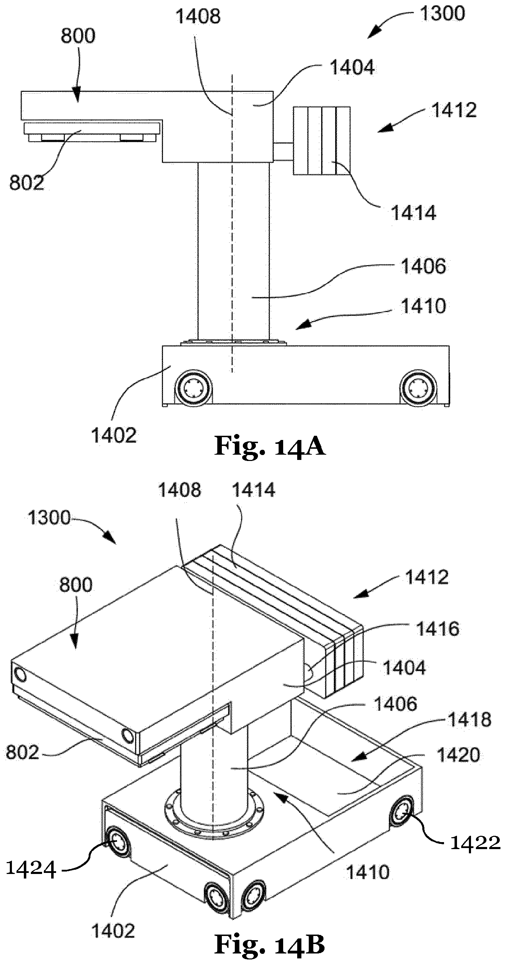

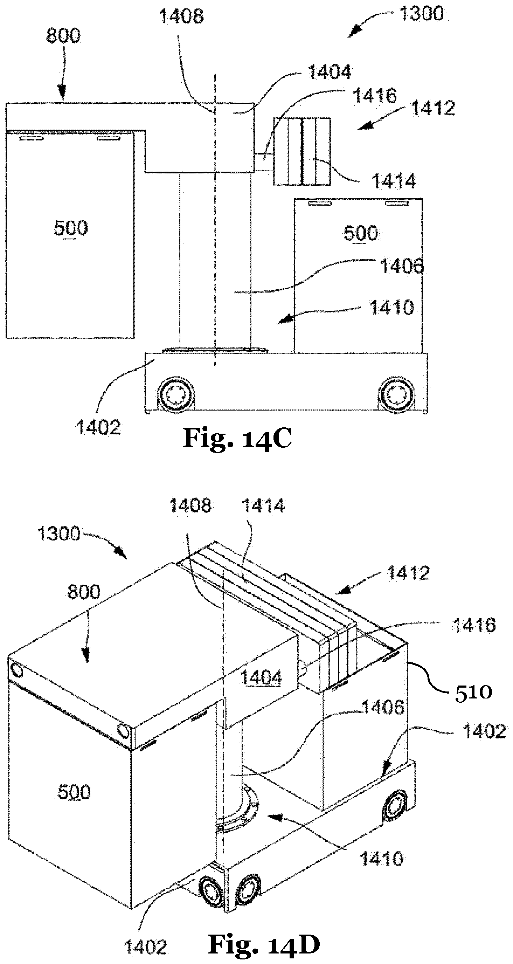

The robot 1300 is shown in isolation in Figs. 14a, 14B, 14C and 14D, However, whereas the robot 1300 in Figure 13 has a base portion 1402 with a footprint that corresponds to the footprint of a single storage column 102 of the automated storage and retrieval system, the robot 1300 shown in Figs. 14a, 14B, 14C and 14D has a base portion 1402 with a footprint that corresponds to the footprint of two storage column 102. For simplicity, the common features of these robots will now be described.

Robot 1300 may operate in a similar manner to robots 202 and 204 described above and may have any of the features of those robots. For example robot 1300 may comprise operational equipment (not shown) for the robot 1300 including drive, power and control systems.

The robot 1300 comprises a base portion 1402, and a lifting portion 1404. lifting portion 1404 is vertically spaced apart from the base portion 1402 and comprises a lifting device 800 to enable the robot 1300 to lift stacker frames 500, such as lifting device 800 shown in Figs. 8A, 8B, 8C, 8D, 9, and 10. Alternatively, the lifting device may be a lifting device 1100 for lifting storage containers 504 out of stacker frames 500, such as the lifting device 1100 shown in Figs. 11 and 12. In either case, the lifting device 800 or 1100 may comprise lifting bands 804 connected to a lifting frame 802 or 1102, which are windable/winchable from at least one lifting shaft (not depicted) of the robot 1300.

The lifting portion 1404 is rotatably coupled to the base portion 1402 via a support 1406. In the example shown in in Figs. 14a, 14B, 14C and 14D, the lifting portion 1404 is attached to a top end of the support 1406 such that relative movement and/or rotation of the lifting portion 1404 and the support 1406 is not permitted. The support 1406 is also in the form of a vertically orientated pole 1406. The lifting portion 1404 is rotatable around a vertical rotational axis 1408, which coincides with a longitudinal axis of the support 1406, by rotating the support 1406. A rotating device 1410 is arranged on or in the base portion 1402 and configured to rotate the support 1406 relative to the base portion 1402 about the vertical rotational axis 1408. In an example implementation, the rotating device 1410 may comprise a slewing bearing. The slewing bearing may be configured to hold the support 1406 upright, while allowing it to rotate relative to the base portion 1402.

In some implementations, the base portion 1402 may comprise one or more openings (not shown) such that, when in the first position, the lifting portion 1404 is positioned over the opening such that the lifting device 800 may lift a container 500 from a storage column 102 of the automated storage and retrieval system, for example, through the opening. The same is true of all base portions described herein.

In some implementations, the lifting portion 1404 comprises a counterweight device 1412, which comprises a counterweight 1414 that is movable horizontally relative to the lifting portion 1404 such that it may be positioned at selected distances from the lifting portion 1404 or vertical rotational axis 1408. This allows the counterweight device 1412 to compensate for loads carried by the lifting device 800, particularly when the lifting device 800 is positioned in such a way that it overhangs or extends beyond the base portion 1402, as depicted in Figs. 14a, 14B, 14C and 14D.

Figs. 13, 14C and 14D show the robot 1300 holding a stacker frame 500 via lifting device 800. The stacker frame 500 may hold a plurality of storage containers 504 that may be filled with items. Due to the weight of the stacker frame 500 acting on the lifting device 800 and the lifting portion 1404, which overhang or extend beyond the base portion 1402 when in the position depicted in Figs. 13, 14C and 14D, a rotational force may be generated at the base portion 1402, which may lead to a tilting or tipping of the robot 1300. This could cause the robot 1300 to fail. For example, at least some of wheels of the robot 1300 could lose contact with the rail system 116 or the robot 1300 itself could fall off the rail system 116. The magnitude of the rotational force is dependent on the weight of the stacker frame 500 and its contents, as well as on the positioning of the lifting portion 1404 relative to the base portion 1402 and other geometrical and physical properties of the robot 1300. To compensate for this rotational force and prevent failure of the robot 1300, the counterweight 1414 can be moved to increase or decrease its distance from the lifting portion 1404 or the vertical rotational axis 1408.

The counterweight 1414 may be configured to be moved perpendicularly to the vertical rotational axis 1408. The direction is exemplarily shown with dashed line 1302 in Fig. 13. The counterweight 1414 may be coupled to the lifting portion 1404 via a movable counterweight guide 1416. The counterweight guide 1416 may comprise two parallel rails, beams or rods coupled to the counterweight 1414 at one end and located within complementarily shaped recesses in the lifting portion 1404. A system (not shown) for moving the counterweight guide 1416 relative to lifting portion 1404 may be located within or on the lifting portion 1404.

The robot 1300 may be configured to automatically adjust the distance of the counterweight 1414 from the lifting portion 1404 or the vertical rotational axis 1408 depending on the weight of a stacker frame 500 that is carried by the lifting device 800 of the robot 1300. However, a control system of the automated storage and retrieval system, such as control system described above and shown in Fig. 4, may be able to send a signal to the robot 1300 to adjust the distance of the counterweight 1414 according to the known weight of the respective stacker frame 500.

The distance of the counterweight 1414 from the lifting portion 1404 or the vertical rotational axis 1408 may be adapted according to the motion of the stacker frame 500. For example, the distance may be slightly increased when the stacker frame 500 is accelerated in an upward direction or when reducing a lowering speed of the stacker frame 500 in the respective storage column 102, as this may lead to an additional downward force on the lifting portion 1404. In a further example, the distance may be decreased when a lowering speed of the stacker frame 500 is increased, or when a lifting speed is slowed down, as this may lead to a reduced downward force on the lifting portion 1404.

Providing a single lifting device 800 in conjunction with a counterweight device 1412 allows the base portion 1402 to have a smaller footprint. For example, the base portion may have a footprint that corresponds to the footprint of a single storage column 102 of the automated storage and retrieval system, as shown in Fig. 13.

The geometry of the robot 1300 may be chosen in a way that the lifting device 800 can lift a stacker frame 500 from a first storage column 102a to a position just above the rail system 116, then rotate it about 180° and to lower it directly into a second storage column 102b without requiring any movement of the robot 1300 along the rail system 116. Advantageously, robot 1300 is able to handle stacker frame 500 or other types of containers more efficiently than conventional robots which would require movement to perform such an operation.

In some implementations, the vertical rotational axis 1408 and/or the support 1406 may be arranged in the centre of the base portion 1402.

The robot 1300 comprises a first set of wheels 1422 and a second set of wheels 1424 disposed on the base portion 1402 of the robot 1300. The first set of wheels 1422 is arranged at first opposite sides of the base portion 1402 for moving the robot 1300 in the first direction X 108. The second set of wheels 1424 is arranged at second opposite sides of the base portion 1402, for moving the robot 1300 in the second direction Y 110, orthogonal to the first direction X 108. In this example, the first set of wheels 1422 is displaceable in a vertical direction Z 114 between a first position, in which the first set of wheels 1422 allows movement of the robot 1300 in the first direction X 108, and a second position, in which the second set of wheels 1424 allows movement of the robot 1300 in the second direction Y 110. The wheels of the other robots 1600, 1800, 1900 and 2000 described below may be similarly configured to the first set of wheels 1422 and the second set of wheels 1424.

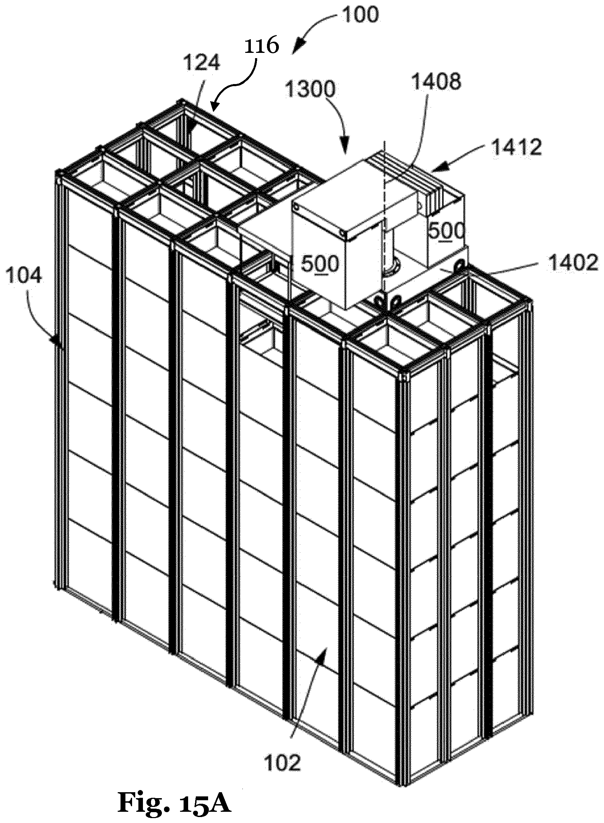

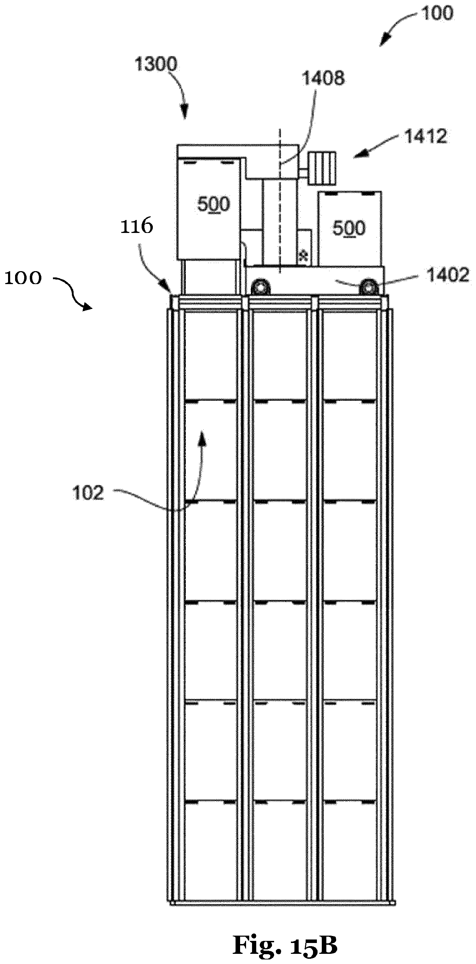

Regarding the robot 1300 shown in Figs. 14a, 14B, 14C, 14D, 15A and 15B, as mentioned above, the base portion 1402 has a footprint that corresponds to the size of two storage columns 102. As apparent from Fig. 14B, the base portion 1402 has a support surface 1418, which is configured to support a stacker frame 500 (or may be configured to support any other type of container), which may be deposited on the support surface 1418 by the lifting device 800. The support surface 1418 may be dimensioned and positioned on the portion 1402 such that the lifting portion 1404 can be rotated about the vertical rotational axis 1408 to position the lifting device 800 above the support surface 1418. By lowering the lifting frame 802 of the lifting device 800, the stacker frame 500 may be placed on the support surface 1418. In this example implementation, the support surface 1418 comprises an indentation 1420, which partially encloses a stacker frame 500 inserted into to the indentation 1420 to stabilise the stacker frame 500.

In some implementations, the base portion 1402 may have two or more (not shown) support surface 1418. For example, a further support surface may be placed at 90° relative to the depicted support surface or two further support surfaces may be placed at 90° relative to the depicted support surface 1418 and at 180° degrees relative to one another such that there are three support surface.

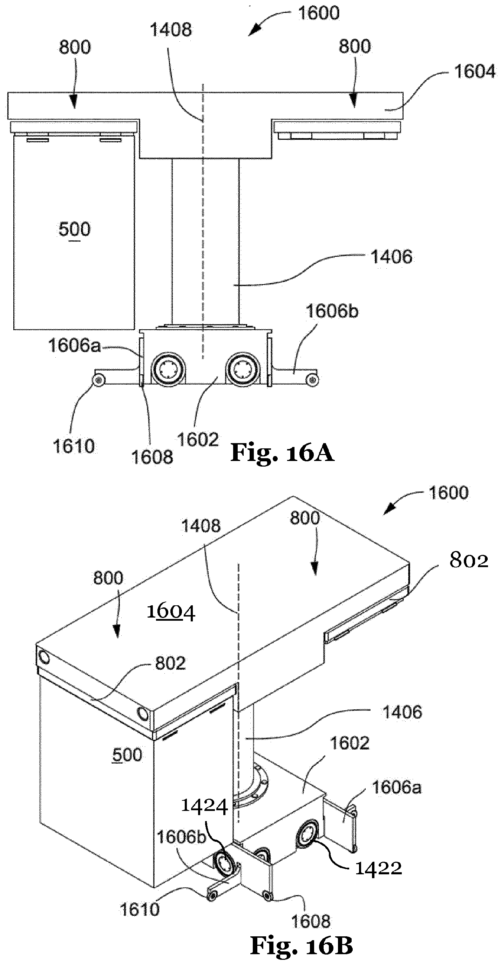

In some implementations, any of the robots described herein could be provided with one or more support surface 1418 of the type described herein. For example, any of robots 1300, 1600 1800, 1900 and 2000 could have one or more support surface 1418. For example, robot 1800 may have one or two support surfaces arranged at 90° relative to the orientation of the lifting portion 1604 as depicted in Fig. 16B and at 180° degrees relative to one another.

Figs. 14C and 14D show the robot 1300 with one stacker frame 500 being held by the lifting device 800 and one stacker frame 6 being placed in the indentation 1420 of the support surface 1418.

Figs. 15A and 15B show the robot 1300 on the rail system 116 of the grid 100. In Fig. 15A, it is apparent that the base portion 1402 covers two storage columns 102 or access openings 124 above the columns 102, while the stacker frame 500 held by the stacker frame lifting device 800 is located directly above a further storage column 102 or access opening 124.

The robotic container-handling vehicle 1300 is shown Fig. 15A and 15B in a first position in which a lifting portion 1404 of the robot may lift a container from a storage column 102 of the automated storage and retrieval system, as described below.

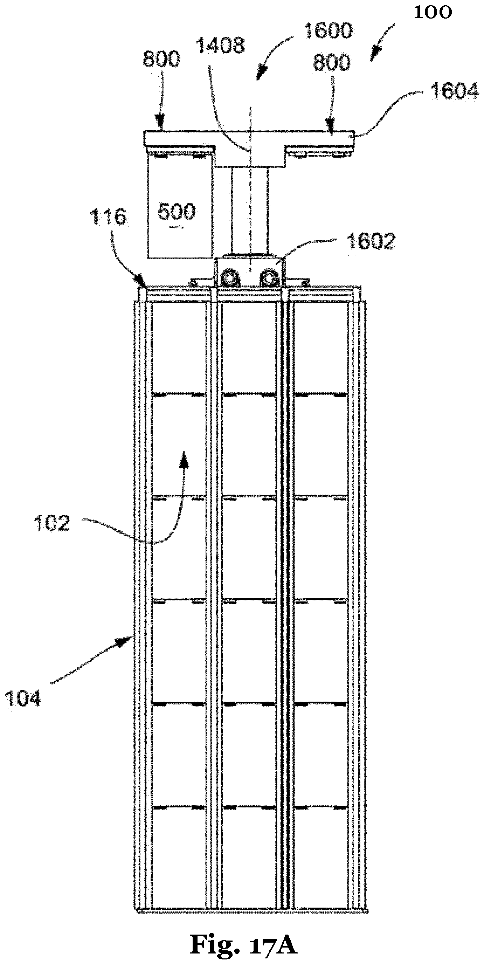

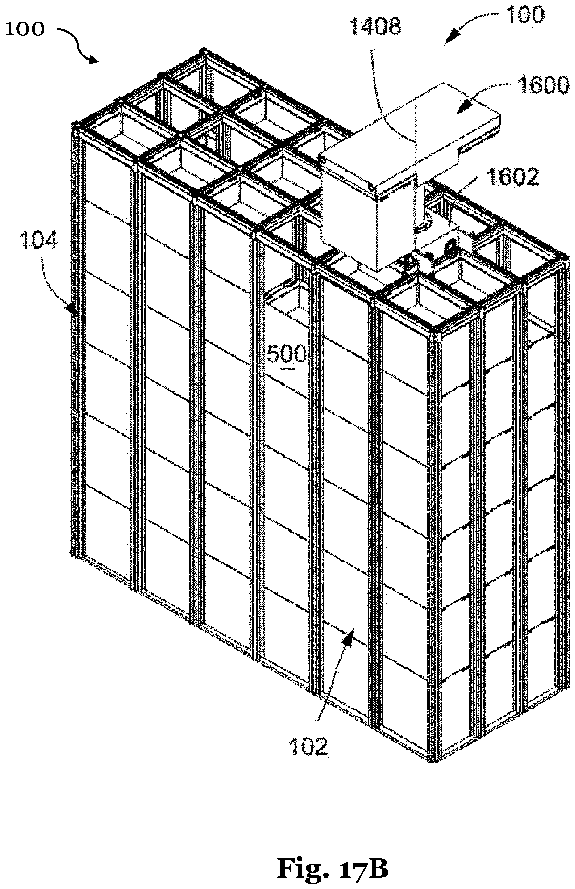

Figs. 16A, 16B, 17A and 17B show a robot 1600 suitable for handling stacker frames 500. Figs. 17A and 17B show a subsection of the automated storage and retrieval system shown in Fig. 1. A portion of the grid 100 can be seen together with the robotic container-handling vehicle 1600 (also known as a robotic vehicle or robot) operating on the rail system 116. In the system shown in Figs. 17A and 17B, the containers or bins 112 are multi-container frames 500. As noted above, in this implementation the multi-container frames 500 are all stacker frames 500, in which the containers are stored one on top of the other. Accordingly, for simplicity, the phrase "stacker frame" will be used hereafter. However, the following description applies to any form of multi-container frame. It will be noted that the robot 1600 may be used with any type of containers or bins 112 and need not necessarily be limited to use with stacker frames 500.

The robotic container-handling vehicle 1600 is shown Figs. 17A and 17B in a first position in which a lifting portion 1604 of the robot may lift a containers from storage columns 102 of the automated storage and retrieval system, as described below.

Robot 1600 may operate in a similar manner to robots 202 and 204 described above and may have any of the features of those robots. For example robot 1600 may comprise operational equipment (not shown) for the robot 1600 including drive, power and control systems.

The robot 1600 has two lifting devices 800 arranged on or in a rotatable lifting portion 1604. The lifting devices may be examples of lifting device 800 shown in Figs. 8A, 8B, 8C, 8D, 9, and 10. Alternatively, the lifting device may be a lifting device 1100 for lifting storage containers 504 out of stacker frames 500, such as the lifting device 1100 shown in Figs. 11 and 12. In an example, the lifting devices of the robot 1600 may respectively be a lifting device 800 and a lifting device 1100, such that the robot 1600 can lift stacker frames 500 and storage containers 504.

The lifting devices 800 are spaced apart from the centre of the lifting portion 604 and/or the from the vertical rotational axis 1408, for example in directly opposing directions. In the illustrated example, the lifting devices 800 are arranged 180° from each other relative to the vertical rotational axis 1408. The spacing of the two lifting devices 800 corresponds to the spacing of columns 102 of the grid 100. The robot 1600 is configured to simultaneously lift two stacker frames 500 from two different storage columns 102.

The base portion 1602 has a footprint that corresponds to the footprint of a single storage column 102. In addition, first stabilizer arms 1606a and second stabilizer arms 1606b are attached to the portion 1602 to support a set of first stabilizer wheels 1608 and a set of second stabilizer wheels 1610, such that the set of first stabilizer wheels 1608 and a set of second stabilizer wheels 1610 are horizontally spaced from the base portion 1602. The set of first stabilizer wheels 1608 are aligned with wheels 1424 of the base portion 1602 for moving the robot 1600 in the direction Y 110. The set of second stabilizer wheels 1610 are aligned with wheels 1422 of the base portion 1602 for moving the robot 1600 in the direction X 108. The stabilizer arms 1606a and 1606b are configured to position their respective set of first stabilizer wheels 1608 and a set of second stabilizer wheels 1610 on the rail system 116.

In an example implementation, the stabilizer arms 1606a and 1606b may also be flat in shape, such that they do not protrude into the access openings 124 above the columns 102. This means that the stacker frames 500 can be lifted and lowered without the stabilizer arms 1606a and 1606b or stabilizer wheels 1608 and 1610 obstructing such an operation.

In an example implementation, the stabilizer arms 1606a and 1606b maybe configured to be raised and lowered to selectively disengage or engage the respective stabilizer wheels 1608 and 1610 with the rail system 116. For example, both sets of stabilizer wheels 1608 and 1610 may be lowered to engage the rail system 116 during a stacker frame 500 lowering/lifting operation of the robot 1600. When moving the robot 1600 on the rail system 116, stabilizer arms 1606a and 1606b may be raised. Alternatively, only the stabilizer arms 1606a and 1606b and stabilizer wheels 1608 and 1610 corresponding to the driving wheels 1422 and 1424 being used to move the robot 1600 at any given time are lowered to engage the rail system 116 during movement of the robot 1600.

In another example implementation, stabilizer arms 1606a and 1606b may be configured to slid in and out of the base portion in order to engage or disengage the stabilizer wheels 1608 and 1610 with the rail system 116.

It will be appreciated that any of the robots 1300, 1600, 1800, 1900 and 2000 described herein could be provided with stabilizer arms 1606a and 1606b and stabilizer wheels 1608 and 1610 or the type described above.

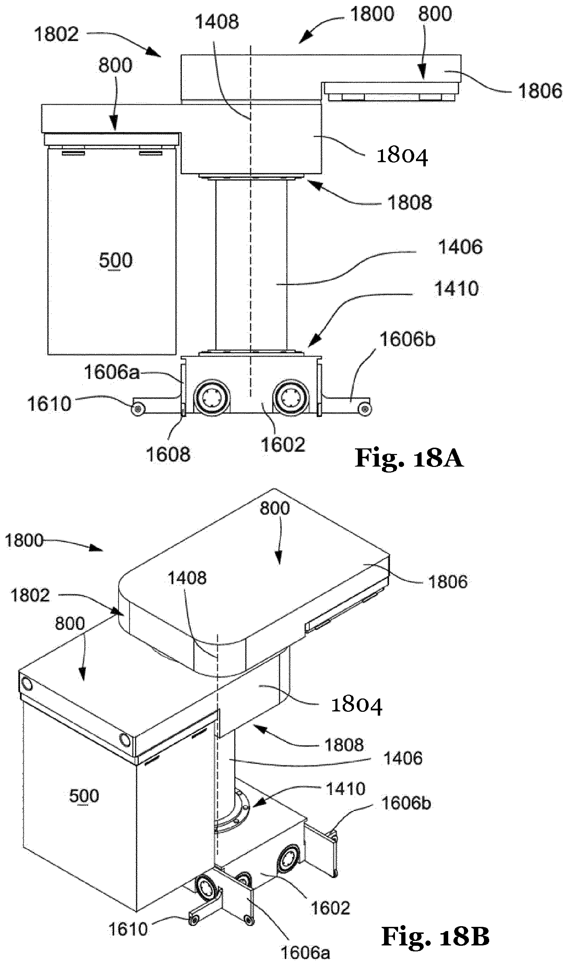

In Figs. 18A and 18B, a robot 1800 is shown, which has a top part 1802 that comprises a first lifting portion 1804 and a second lifting portion 1806 located above the first lifting portion 1804. Both the first lifting portion 1804 and the second lifting portion 1806 are independently rotatable relative to a base portion 1602, which may correspond to the base portion 1602 of the robot 1600 described above. The first lifting portion 1804 and the second lifting portion 1806 may each have a respective lifting device 800 to enable the robot 1800 to lift stacker frames 500, such as lifting device 800 shown in Figs. 8A, 8B, 8C, 8D, 9, and 10. Alternatively, the lifting device may be a lifting device 1100 for lifting storage containers 504 out of stacker frames 500, such as the lifting device 1100 shown in Figs. 11 and 12. In either case, the lifting device 800 or 1100 may comprise lifting bands 804 connected to a lifting frame 802 or 1102, which are windable/winchable from at least one lifting shaft (not depicted) of the robot 1800.

Robot 1800 may operate in a similar manner to robots 202 and 204 described above and may have any of the features of those robots. For example robot 1800 may comprise operational equipment (not shown) for the robot 1800 including drive, power and control systems. It will be noted that the robot 1800 may be used with any type of containers or bins 112 and need not necessarily be limited to use with stacker frames 500.

In this example implementation, the support 1406 that extends upwardly from the base portion 1602 may be fixedly attached to the second lifting portion 1806, such that the second lifting portion 1806rotates with the support 1406. The support 1406 may pass through a corresponding orifice in the first lifting portion 1804.

A second rotating device 1808, which may in an example implementation comprise a slewing bearing, is arranged at the first lifting portion 1804 in addition to a first rotating device 1410 located on or in the base portion 1602. The first rotating device 1410 maybe the same as the rotating device 1410 described above. The second rotating device 1808 may be configured to facilitate rotation of the first lifting portion 1804 relative to the support 1406 and the second lifting portion 1806. In this manner, the first lifting portion 1804 and the second lifting portion 1806 are independently rotatable.

In an example implementation, it may be possible to deactivate the second rotating device 1808, such that both the first lifting portion 1804 and the second lifting portion 1806 rotate simultaneously in unison. In addition, the first lifting portion 1804 may, in some examples, be rotated relative to the support 1406 and the second lifting portion 1806 when the second rotating device 1808 is activated.

Figs. 19A and 19B show a robot 1900, which is similarly designed to the robot 1600 described above and shown in Figs. 16A, 16B, 17A and 17B and like reference numerals refer to like features. However, the robot 1900 additionally has a counterweight device 1902 integrated into a lifting portion 1904. The counterweight device 1902 provides a similar function to the counterweight device 1412 described above and shown in Figs. 13, 14a, 14B, 14C, 14D, 15A and 15B. Here, a counterweight 1904 is movably supported on a linear counterweight guide 1906 and is coupled with a counterweight drive (not shown) configured to selectively move counterweight 1904 to different positions on a linear counterweight guide 1906 at desired distances from the vertical rotational axis 1408 or centre of the lifting portion 1904. Advantageously, this can account for imbalances in load between containers held by the two lifting devices 800 of the a lifting portion 1904. For example,

Robot 1900 may operate in a similar manner to robots 202 and 204 described above and may have any of the features of those robots. For example robot 1900 may comprise operational equipment (not shown) for the robot 1900 including drive, power and control systems. It will be noted that the robot 1600 may be used with any type of containers or bins 112 and need not necessarily be limited to use with stacker frames 500.

Figs. 20A and 20B show a robot 2000 having largely the same features as the robot 1300 described above and shown in Figs. 14a, 14B, 14C, 14D, 15A and 15B and like reference numerals refer to like features. However, in this example implementation, a different lifting device 2002 is coupled to the lifting portion 1404. The lifting device 2002 comprises a lifting frame 802 as described above (although lifting frame 1102 described above could also be used), shown holding a stacker frame 500. The lifting frame 802 is rotatably coupled to a positioning frame 2008 via a rotating device 2006 configured to rotate the lifting frame 802 relative to the positioning frame 2008. The positioning frame 2008 is movably coupled to the lifting portion 1404 via an attachment 2004 of the lifting portion 1404 configured to slide along rails 2010 on the lifting portion 1404. In this manner, the positioning frame 2008, and therefore the lifting frame 802 and stacker frame 500, can be move relative to the lifting portion 1404 towards and away from the vertical rotational axis 1408.

The lifting device 2002 is therefore able to move the stacker frame 500 towards and away from the vertical rotational axis 1408 and also rotate the stacker frame 500. In this manner it will be appreciated that the robot 2000 is able to insert and remove stacker frames 500 from storage columns 102 at 90° to the direction shown with dashed line 1302 in Fig. 13, whereas the robot 1300 shown in Fig. 13 would be unable to do so given the rectangular shape of the stacker frames and the access openings 124.

Generally, lifting device 2002 enables greater manipulation of containers such as stacker frames. If lifting device 2002 is provided with lifting frame 1102 for lifting storage containers 504, robot 2000 could be used to position containers 504 within stacker frames.

It will be appreciated that any of the robots described above could be provided with such a lifting device 2002.

Robot 2000 may operate in a similar manner to robots 202 and 204 described above and may have any of the features of those robots. For example robot 2000 may comprise operational equipment (not shown) for the robot 2000 including drive, power and control systems. It will be noted that the robot 1600 may be used with any type of containers or bins 112 and need not necessarily be limited to use with stacker frames 500.

### Penultimate comments

It is to be understood that the above description is intended to be illustrative, and not restrictive. Many other implementations will be apparent to those of skill in the art upon reading and understanding the above description. Although the present disclosure has been described with reference to specific example implementations, it will be recognized that the disclosure is not limited to the implementations described, but can be practiced with modification and alteration within the spirit and scope of the appended claims. Accordingly, the specification and drawings are to be regarded in an illustrative sense rather than a restrictive sense. The scope of the disclosure should, therefore, be determined with reference to the appended claims, along with the full scope of equivalents to which such claims are entitled.

## Claims

1. A robotic vehicle for handling containers, the containers configured to be stored in storage columns of an automated storage and retrieval system, the robotic vehicle comprising:
a base portion;
a first lifting portion located above the base portion and rotatably coupled to the base portion such that the first lifting portion can rotate relative to the base portion about a vertical rotational axis;
a first lifting device for lifting a container from a storage column of the automated storage and retrieval system, wherein the first lifting device is coupled to the first lifting portion;
a drive system for moving the robotic vehicle on rails of a rail system above the storage columns;
wherein, in a first position, the first lifting portion may lift a container from a first storage column of the automated storage and retrieval system.

2. The robotic vehicle of claim 1, wherein the first lifting device is rotatably coupled to the first lifting portion, such that the first lifting device can be rotated relative to the first lifting portion while carrying a container, thereby rotating the container relative to the first lifting portion.

3. The robotic vehicle of claim 2, wherein the first lifting device is movable relative to the first lifting portion, optionally, wherein the first lifting device is movable towards and away from the vertical rotational axis.

4. The robotic vehicle of any preceding claim, wherein a second lifting device is coupled to the first lifting portion, optionally, wherein the first lifting device and the second lifting device are arranged toward opposite ends of the first lifting portion, further optionally wherein the first lifting device and the second lifting device are spaced apart by the same horizontal distance from the vertical rotational axis.

5. The robotic vehicle of any preceding claim, wherein the robotic vehicle further comprises a first support surface for supporting a container, optionally wherein the first support surface is arranged on the base portion.

6. The robotic vehicle of claim 5, wherein the robotic vehicle further comprises a second support surface for supporting a container, optionally wherein the second support surface is arranged on the base portion, further optionally wherein the second support surface is arranged on an opposite end of the base portion to the first support surface.

7. The robotic vehicle of any preceding claim, the robotic vehicle further comprising:
a second lifting portion rotatably coupled to the base portion such that the second lifting portion can rotate relative to the base portion, wherein the second lifting portion is independently rotatable relative to the first lifting portion; and
a second lifting device coupled to the second lifting portion.

8. The robotic vehicle of any preceding claim, wherein the robotic vehicle further comprises a counterweight device comprising a movable counterweight.

9. The robotic vehicle of claim 8, wherein the movable counterweight of the counterweight device is movably coupled to the first lifting portion, optionally, wherein the counterweight is coupled to the first lifting portion via a movable counterweight guide, further optionally, wherein the first lifting device and the moveable counterweight are arranged toward opposite ends of the first lifting portion.

10. The robotic vehicle of claim 8, wherein the moveable counterweight is configured to be moved to different locations between the first lifting device and a/the second lifting device coupled to the first lifting portion.

11. The robotic vehicle of any preceding claim, further comprising stabilizer wheels, optionally, further comprising stabilizer arms, each coupled to a respective one of the stabilizer wheels, further optionally, wherein the stabilizer arms are configured to be raised and lowered to selectively disengage or engage their respective stabilizer wheels with the rail system.

12. The robotic vehicle of any preceding claim, wherein the first lifting portion is rotatably coupled to the base portion via a support, such that the first lifting portion is spaced apart from the base portion by the support, optionally wherein a longitudinal axis of the support defines the vertical rotational axis.

13. The robotic vehicle of any preceding claim, wherein the containers are multi-container frames configured to accommodate a plurality of storage containers in an interior space of the multi-container frames.

14. An assembly comprising one or more multi-container frames and a robotic vehicle as claimed in any preceding claim, optionally, wherein the multi-container frame comprises an interior space configured to accommodate a plurality of storage containers, further optionally, wherein the plurality of storage containers are stored one on top of another in a vertical stack.

15. An automated storage and retrieval system, comprising:
a plurality of storage columns;
a rail system located above the storage columns;
a plurality of multi-container frames configured to be stored in the storage columns of the automated storage and retrieval system; and
a robotic vehicle according to any of claims 1 to 13.
